# EUROPÄISCHE PATENTSCHRIFT

(11) **EP 0 612 950 B1**
(45) Veröffentlichungstag und Bekanntmachung des Hinweises auf die Patenterteilung: **23.04.1997**
(21) Anmeldenummer: 94100454.1
(22) Anmeldetag: 13.01.1994
(51) Int. Cl.: F16L 37/127

(54) **Spannverbindung**
Clamping connection
Connexion de serrage

(30) Priorität: 26.02.1993 DE 4306028
(43) Veröffentlichungstag der Anmeldung: 31.08.1994
(73) Patentinhaber: TRW United-Carr GmbH & Co. KG, D-67677 Enkenbach-Alsenborn (DE)
(72) Erfinder: Rückwardt, Hans-Werner, D-67307 Göllheim/Pfalz (DE)
(74) Vertreter: Schieschke, Klaus, Dipl.-Ing.

(56) Entgegenhaltungen:
- BE-A- 683 268
- DE-B- 1 187 077
- DE-U- 6 750 287
- DE-U- 9 007 363
- DE-U- 9 102 678
- FR-A- 720 845

## Beschreibung

Die Erfindung bezieht sich auf eine Spannverbindung aus Kunststoff, mit zwei hülsenförmigen Elementen, deren Endbereiche einander überdecken und durch mindestens ein Verriegelungsteil lösbar miteinander verbunden sind.

Als allgemeiner Stand der Technik sind bereits derartige Spannverbindungen bekannt, welche jeweils zwei rohr- oder schlauchförmige Teile miteinander verbinden. Diese Verbindung wird beispielsweise durch eine drehbare Klemmhülse hergestellt, welche bajonettartige Verschlußteile beaufschlagt und damit die Klemmverbindung aus einer Offenstellung in eine Schließstellung überführt, wobei beide hülsenförmigen Elemente unter Spannung miteinander verbunden sind. Es ergibt sich bei diesen bekannten Spannverbindungen ein erheblicher technischer Aufwand, wobei außerdem eine Drehung um die Längsachse der beiden hülsenförmigen Elemente ausgeführt werden muß, um diese Verbindung herzustellen bwz. zu lösen.

Durch die BE-A-683268 ist bereits eine Spannverbindung aus Kunststoff bekannt, die am Innenumfang des äußeren Elements einen eingelagerten, umlaufenden Dichtring aufweist, welcher das konisch zulaufende Ende des inneren Elements direkt beaufschlagt.

Demgegenüber liegt der vorliegenden Erfindung die Aufgabe zugrunde, eine Spannverbindung der eingangs genannten Art zu schaffen, welche schnell und mit geringem Zeitaufwand zwei hülsenförmige Teile funktionssicher miteinander verbindet.

Diese Aufgabe wird erfindungsgemäß mit den Merkmalen des Anspruchs 1 gelöst. Durch diese besonders konstruktive Gestaltung einer Spahnverbindung lassen sich zwei hülsenförmige Teile schnell und funktionssicher zusammenfügen, ohne daß ein Verdrehen um die Längsachse erforderlich ist.

Der elastische Federing hat dabei eine Doppelfunktionen: Einmal dient er zur Abdichtung zwischen den Endbereichen der hülsenförmigen Elemente und zum anderen übt er eine Federwirkung aus, welche im Zusammenwirken mit den Rastarmen und den Anschlägen die funktionssichere Halterung der Spannverbindung bewirkt.

Zur Verbesserung der Dichtwirkung ist die Stirnseite des Rings in mindestens eine Nut am Innenumfang des Endbereichs eingelagert sein. In weiterer Ausgestaltung der Erfindung können zwei Anschläge und zwei Rastarme in den Endbereichen einander gegenüberliegend vorgesehen sein. Weiterhin kann an dem Ring vorteilhafterweise ein an dem einen Endbereich angeordneter umlaufender Zentrierflansch angrenzen, dessen Stirnseite an dem Innenumfang des anderen Endbereichs anliegt. Durch diesen Zentrierflansch werden die beiden Endbereiche der hülsenförmigen Elemente korrekt in Bezug auf ihre Lage zur Längsachse ausgerichtet.

Der überdeckende Endbereich kann zwei Ausnehmungen aufweisen, in welche die Anschläge des anderen Endbereichs einlagerbar sind, wobei die Ausnehmungen endseitig durch zwei Lagerstellen für eine Schwenkachse des jeweiligen Rastarms begrenzt sind. Jeder Rastarm kann zweiflügelig ausgebildet sein mit einem Eingriffsflügel und einem Betätigungsflügel. Weiterhin kann der Eingriffsflügel jeweils in eine Nut des Anschlags einlagerbar sein. Diese Anschläge können im Abschlußbereich der Ausnehmungen liegen.

Die Erfindung wird nachfolgend anhand eines in der Zeichnung dargestellten Ausführungsbeispiels näher beschrieben.

In der Zeichnung zeigen:
- Fig. 1: eine perspektivische Ansicht einer Spannverbindung;
- Fig. 2: einen Längsschnitt durch die Spannverbindung;
- Fig. 3: eine Vorderansicht der Spannverbindung;
- Fig. 4: eine Draufsicht auf die Spannverbindung.

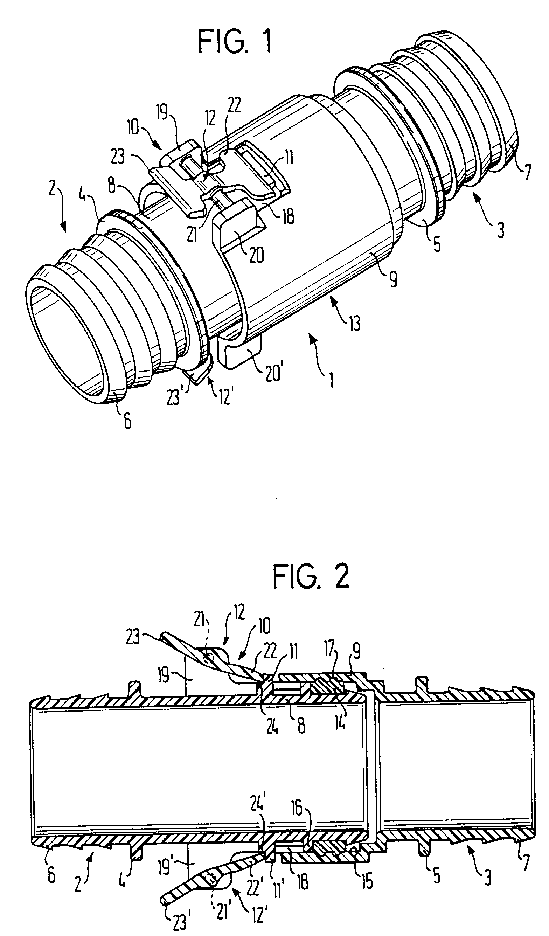

Die in den Figuren 1 bis 4 dargestellte Spannverbindung 1 besteht aus Kunststoff. Sie dient dazu, zwei hülsenförmige Elemente 2 und 3 miteinander zu verbinden. Diese hülsenförmigen Elemente weisen nach Fig. 1, 2 und 4 einen umlaufenden Flansch 4 bzw. 5 auf, an welchen sich Keilringe 6 bzw. 7 anschließen. In diesen Bereich der Keilringe 6 bzw. 7 können nicht näher dargestellte rohrförmige oder schlauchförmige Teile aufgeschoben werden, bis sie stirnseitig an den Flanschen 4 bzw. 5 anliegen.

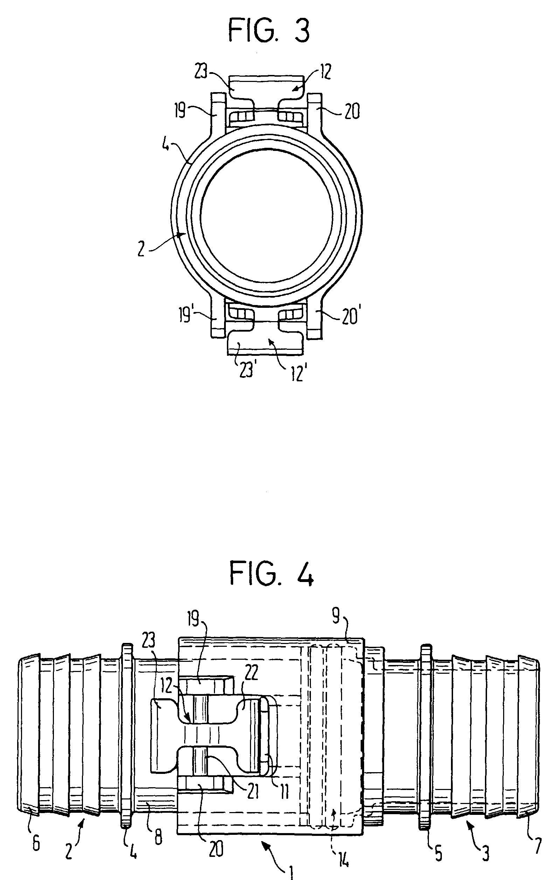

Das hülsenförmige Element 2 weist einen Endbereich 8 auf, welcher in einer Überdeckungszone 13 von einem Endbereich 9 des hülsenförmigen Elements 3 überdeckt wird. Dieser Endbereich 9 ist mit zwei einander gegenüberliegenden Ausnehmungen 18 versehen. Im auslaufenden Bereich gehen diese Ausnehmungen 18 in Lagerstellen 19 und 20 bzw. gegenüberliegende Lagerstellen 19' und 20' über (Fig. 3).

Diese Lagerstellen 19 und 20 bzw. 19' und 20' dienen jeweils zur Lagerung einer Schwenkachse 21 bzw. 21'. In dieser Schwenkachse ist jeweils ein Rastarm 12 bzw. 12' gelagert.

Jeder Rastarm 12 bzw. 12' ist zweiflügelig ausgebildet mit einem Eingriffsflügel 22 bzw. 22' und einem Betätigungsflügel 23 bzw. 23'.

Der Endbereich 8 des hülsenförmigen Elements 2 weist, an die Lage der Rastarme 12 bzw. 12' angepaßt, einander gegenüberliegend zwei Anschläge 11 und 11' auf, welche jeweils mit einer Nut 24 bzw. 24' versehen sind (Fig. 2). Wie aus Fig. 1 und 4 ersichtlich, liegen die Anschläge 11 bzw. 11' im Abschlußbereich der Ausnehmungen 18, so daß insgesamt eine raumsparende Bauform erzielt wird.

Im Abstand zu diesen Anschlägen 11 und 11' ist im Endbereich 8 als Federelement 14 ein umlaufender elastischer Ring gelagert, welcher mit seiner Stirnfläche in eine Nut 17 am Innenumfang 15 des Endbereichs 9 eingreift, wenn der Endbereich 9 des hülsenförmigen Teils 3 den Endbereich 8 des hülsenförmigen Teils 2 überdeckt.

In dieser Situation lagern sich die Eingriffsflügel 21 und 22' der Rastarme 12 und 12' in die jeweilige Nut 24 bzw. 24' der Anschläge 11 bzw. 11' ein. Damit ist eine einwandfreie und justierte Fixierung des hülsenförmigen Elements 2 innerhalb des hülsenförmigen Elements 3 gegeben.

Eine gute Ausrichtung zur Längsachse L-L resultiert daraus, daß der federnde Ring 14 an der einen Seite durch einen an den Endbereich 8 angeformten Zentrierflansch 16 begrenzt ist. Die Stirnseite des Zentrierflanschs 16 liegt am Innenumfang 15 des Endbereichs 9 des hülsenförmigen Elements 3 an. Durch diesen Zentrierflansch 16 wird im Zusammenwirken mit dem Einlagern des Betätigungsflügels 23 bzw. 23' in die Nut 24 bzw. 24' eine sehr gute Justierung der beiden hülsenförmigen Elemente 2 und 3 bewirkt.

Durch die erfindungsgemäße Spannverbindung 1 werden zwei hülsenförmige Elemente 2 und 3 auf einfache Weise sowie genau positioniert und gegeneinander abgedichtet miteinander verbunden, wobei durch Einwirkung auf die Eingriffsflügel 22 bzw. 22' die Rastarme 12 bzw. 12' aus der jeweiligen Nut der Anschläge 11 bzw. 11' herausgleiten und damit schnell und einfach die Verbindung zwischen den beiden hülsenförmigen Elementen 2 und 3 gelöst ist.

## Patentansprüche

1. Spannverbindung aus Kunststoff, mit zwei hülsenförmigen Elementen, deren Endbereiche einander überdecken und durch mindestens ein Verriegelungsteil lösbar miteinander verbunden sind, wobei der eine Endbereich (8) am Außenumfang mindestens zwei quer zur Längsachse (L-L) angeordnete Anschläge (11, 11') aufweist, hinter welche als Verriegelungsteil (10) jeweils ein quer zur Längsachse (L-L) schwenkbarer, in dem anderen Endbereich (9) angeordneter Rastarm (12, 12') einlagerbar ist und sich in der Überdeckungszone zwischen den beiden Endbereichen (8, 9) mindestens ein als umlaufender, elastischer Ring ausgebildetes Federlement (14) befindet, welches in dem die Anschläge (11, 11') aufweisenden Endbereich (8) angeordnet ist und stirnseitig den Innenumfang (15) des anderen Elements (9) beaufschlagt, wobei die Stirnseite des Rings (14) in mindestens eine Nut (17) am Innenumfang (15) des Endbereichs (9) eingelagert ist.

2. Spannverbindung nach Anspruch 1,
dadurch gekennzeichnet,
daß zwei Anschläge (11, 11') und zwei Rastarme (12, 12') einander gegenüberliegend vorgesehen sind.

3. Spannverbindung nach Anspruch 1 und 2,
dadurch gekennzeichnet,
daß an den Ring (14) ein an dem einen Endbereich (8) angeordneter, umlaufender Zentrierflansch (16) angrenzt, dessen Stirnseite an dem Innenumfang (15) des anderen Endbereichs (9) anliegt.

4. Spannverbindung nach einem der vorhergehenden Ansprüche,
dadurch gekennzeichnet,
daß der überdeckende Endbereich (9) zwei Ausnehmungen (18) aufweist, in welche die Anschläge (11, 11') des anderen Endbereichs (8) einlagerbar sind und daß die Ausnehmungen (18) endseitig durch zwei Lagerstellen (19, 20; 19', 20') für eine Schwenkachse (21, 21') des jeweiligen Rastarms (12, 12') begrenzt sind.

5. Spannverbindung nach einem der vorhergehenden Ansprüche,
dadurch gekennzeichnet,
daß jeder Rastarm (12, 12') zweiflügelig ausgebildet ist mit einem Eingriffsflügel (22, 22') und einem Betätigungsflügel (23, 23').

6. Spannverbindung nach Anspruch 5,
dadurch gekennzeichnet,
daß der Eingriffsflügel (22, 22') jeweils in eine Nut (24, 24') des Anschlags (11, 11') einlagerbar ist.

7. Spannverbindung nach Anspruch 1 und 4,
dadurch gekennzeichnet,
daß die Anschläge (11, 11') im Abschlußbereich der Ausnehmungen (18) liegen.

## Claims

1. Clamping connection consisting of plastic, having two sleeve-like elements whose end regions overlap one another and are connected to one another in a releasable manner by at least one locking part, one end region (8) having, on the outer circumference, at least two stops (11, 11') which are arranged transversely with respect to the longitudinal axis (L-L) and behind which it is possible to accommodate, as locking part (10), in each case one latching arm (12, 12') which can be pivoted transversely with respect to the longitudinal axis (L-L) and is arranged in the other end region (9), and there being located, in the overlap zone between the two end regions (8, 9), at least one spring element (14) which is designed as a peripheral, elastic ring, is arranged in the end region (8) which has the stops (11, 11') and acts on the inner circumference (15) of the other element (9) with its end side, the end side of the ring (14) being accommodated in at least one groove (17) on the inner circumference (15) of the end region (9).

2. Clamping connection according to Claim 1, characterized in that two stops (11, 11') and two latching arms (12, 12') are provided so as to be located opposite one another.

3. Clamping connection according to Claims 1 and 2, characterized in that the ring (14) is adjoined by a peripheral centring flange (16) which is arranged on one end region (8) and whose end side rests against the inner circumference (15) of the other end region (9).

4. Clamping connection according to one of the preceding claims, characterized in that the overlapping end region (9) has two recesses (18) in which the stops (11, 11') of the other end region (8) can be accommodated, and in that the recesses (18) are delimited on the end sides by two bearing locations (19, 20; 19', 20') for a pivot pin (21, 21') of the respective latching arm (12, 12').

5. Clamping connection according to one of the preceding claims, characterized in that each latching arm (12, 12') is of a double-wing design with an engagement wing (22, 22') and an actuating wing (23, 23').

6. Clamping connection according to Claim 5, characterized in that the engagement wing (22, 22') can be accommodated in each case in a groove (24, 24') of the stop (11, 11').

7. Clamping connection according to Claims 1 and 4, characterized in that the stops (11, 11') are located in the termination region of the recesses (18).

## Revendications

1. Solidarisation par serrage consistant en une matière plastique, et comprenant deux éléments en forme de douilles dont les régions extrêmes se recouvrent mutuellement et sont reliées l'une à l'autre, de manière libérable, par l'intermédiaire d'au moins une pièce de verrouillage, solidarisation dans laquelle l'une (8) des régions extrêmes présente, sur le pourtour extérieur, au moins deux butées (11, 11') agencées transversalement par rapport à l'axe longitudinal (L-L), derrière lesquelles peut venir se nicher un bras encliquetable respectif (12, 12') remplissant la fonction d'une pièce de verrouillage (10), pouvant pivoter transversalement par rapport à l'axe longitudinal (L-L) et disposé dans l'autre région extrême (9) ; et dans laquelle se trouve, dans la zone de recouvrement entre les deux régions extrêmes (8, 9), au moins un élément élastique (14) qui est réalisé sous la forme d'une bague élastique périphérique, est disposé dans la région extrême (8) présentant les butées (11, 11'), et sollicite frontalement le pourtour intérieur (15) de l'autre élément (9), la face extrême de la bague (14) étant encastrée dans au moins une saignée (17) sur le pourtour intérieur (15) de la région extrême (9).

2. Solidarisation par serrage selon la revendication 1,
caractérisée par le fait
que deux butées (11, 11') et deux bras encliquetables (12, 12') sont prévus mutuellement à l'opposé.

3. Solidarisation par serrage selon les revendications 1 et 2,
caractérisée par le fait
qu'une collerette périphérique de centrage (16), disposée sur l'une (8) des régions extrêmes et dont la face extrême est appliquée contre le pourtour intérieur (15) de l'autre région extrême (9), est contiguë à la bague (14).

4. Solidarisation par serrage selon l'une des revendications précédentes,
caractérisée par le fait
que la région extrême coiffante (9) présente deux évidements (18) dans lesquels peuvent venir se nicher les butées (11, 11') de l'autre région extrême (8) ; et par le fait que les évidements (18) sont délimités, aux extrémités, par deux zones de portée (19, 20 ; 19', 20') destinées à un axe de pivotement (21, 21') du bras encliquetable (12, 12') considéré.

5. Solidarisation par serrage selon l'une des revendications précédentes,
caractérisée par le fait
que chaque bras encliquetable (12, 12') est d'une réalisation comprenant deux ailes, avec une aile (22, 22') de venue en prise et une aile d'actionnement (23, 23').

6. Solidarisation par serrage selon la revendication 5,
caractérisée par le fait
que l'aile (22, 22') de venue en prise peut venir respectivement s'encastrer dans une saignée (24, 24') de la butée (11, 11').

7. Solidarisation par serrage selon les revendications 1 et 4,
caractérisée par le fait
que les butées (11, 11') se trouvent dans la zone d'achèvement des évidements (18).
